# NEUE EUROPÄISCHE PATENTSCHRIFT

(11) **EP 3 939 776 B2**
(45) Veröffentlichungstag und Bekanntmachung des Hinweises auf die Entscheidung über den Einspruch: **04.11.2026**
(45) Hinweis auf die Patenterteilung: 12.04.2023
(21) Anmeldenummer: 21185802.2
(22) Anmeldetag: 15.07.2021
(51) Int. Cl.: B29D 30/08, B29D 30/52, B29D 30/00

(54) **VERFAHREN ZUM ERMITTELN SPULMUSTERS FÜR EINE LAUFSTREIFENWICKLUNG UND ANLAGE ZUR HERSTELLUNG VON REIFEN**
METHOD FOR DETECTING A WINDING PATTERN FOR A TREAD WINDING
PROCÉDÉ DE DÉTERMINATION D'UN MODÈLE DE BROCHE POUR UN ENROULEMENT DE BANDE DE ROULEMENT

(30) Priorität: 17.07.2020 DE 102020209014
(43) Veröffentlichungstag der Anmeldung: 19.01.2022
(73) Patentinhaber: Continental Reifen Deutschland GmbH, 30175 Hannover (DE)
(72) Erfinder: Diekmann, Matthias, 30419 Hannover (DE); Kastens, Sven, 30419 Hannover (DE); Pfaff, Florian, 30419 Hannover (DE)
(74) Vertreter: Pelster Behrends Patentanwälte PartG mbB

(56) Entgegenhaltungen:
- WO-A1-02/05143
- WO-A1-2006/129326
- CN-A- 109 849 393
- JP-A- 2018 151 870
- US-A- 4 551 806

## Beschreibung

Die Erfindung betrifft ein Verfahren zum Ermitteln eines durch Wickeln eines Kautschukmaterialstreifens erzeugbaren Spulmusters für eine Laufstreifenwicklung eines zu vulkanisierenden Reifenrohlings, mit dem Schritt: Berechnen eines eine Soll-Geometrie eines Laufstreifenquerschnitts zumindest teilweise ausfüllenden Spulmusters durch eine elektronische Datenverarbeitungseinrichtung, wobei die elektronische Datenverarbeitungseinrichtung das Spulmuster unter Berücksichtigung von Querschnittsinformationen zu der Soll-Geometrie des Laufstreifenquerschnitts und Materialstreifeninformationen zu Eigenschaften des Kautschukmaterialstreifens berechnet.

Ferner betrifft die Erfindung ein Verfahren zum Herstellen eines Fahrzeugreifens, mit den Schritten: Ermitteln eines Spulmusters für eine Laufstreifenwicklung eines zu vulkanisierenden Reifenrohlings mittels einer elektronischen Datenverarbeitungseinrichtung, Wickeln eines Kautschukmaterialstreifens auf eine umlaufende Materiallage, insbesondere eine Gürtelbandage, eines unvollständigen Reifenrohlings in dem ermittelten Spulmuster mittels einer Spuleinrichtung, und Vulkanisieren des Reifenrohlings nach dessen Vervollständigung mittels einer Vulkanisationseinrichtung.

Darüber hinaus betrifft die Erfindung eine Anlage zum Herstellen eines Fahrzeugreifens, mit einer elektronischen Datenverarbeitungseinrichtung zum Ermitteln eines Spulmusters für eine Laufstreifenwicklung eines zu vulkanisierenden Reifenrohlings, einer Spuleinrichtung zum Wickeln eines Kautschukmaterialstreifens auf eine umlaufende Materiallage, insbesondere eine Gürtelbandage, eines unvollständigen Reifenrohlings in einem von der elektronischen Datenverarbeitungseinrichtung berechneten Spulmuster und einer Vulkanisationseinrichtung zum Vulkanisieren des Reifenrohlings nach dessen Vervollständigung.

Bei der Herstellung von Fahrzeugreifen ist es vor dem Vulkanisationsprozess erforderlich, einen zu vulkanisierenden Reifenrohling mit einem Laufstreifen auszustatten. In der Praxis wird hierzu üblicherweise extrudiertes Laufstreifenmaterial, welches bereits die Soll-Geometrie des Laufstreifenquerschnitts aufweist, auf die benötigte Umfangslänge abgelängt und auf eine Gürtelbandage eines unvollständigen Reifenrohlings appliziert.

Bei der herkömmlichen Laufstreifenapplikation werden die extrudierten Laufstreifen mit Andruckrollen auf den Reifenrohling gedrückt und dadurch gelängt. Bei der Auflage des extrudierten Laufstreifens auf die Gürtelbandage entsteht in den Seitenbereichen aufgrund der abfallenden Reifenflanken eine Durchmesserreduktion, sodass es zu einem Aufdicken des Laufstreifenmaterials in den Seitenbereichen kommt. Die beim Andrücken des extrudierten Laufstreifens auftretenden Deformationen sind von den Materialeigenschaften, der vorliegenden Temperatur und dem aktuellen Druck abhängig, sodass eine Berücksichtigung der Materialverformung bereits bei der Herstellung des extrudierten Laufstreifens nur begrenzt möglich ist.

Alternativ zu der herkömmlichen Laufstreifenherstellung kann der Laufstreifenaufbau auch über das sogenannte Stripwinding erfolgen. Beim Stripwinding wird ein vergleichsweise schmaler Kautschukmaterialstreifen auf die Gürtelbandage eines unvollständigen Reifenrohlings gewickelt. Zur Umsetzung der beabsichtigten Soll-Geometrie des Laufstreifenquerschnitts ist im Rahmen des Wickelvorgangs ein spezifisches Spulmuster zu erzeugen, bei welchem die Soll-Geometrie des Laufstreifenquerschnitts durch die Laufstreifenwicklung möglichst präzise ausgefüllt wird. Durch die Umsetzung eines spezifischen Spulmusters soll eine optimale Streifenverteilung umgesetzt werden, über welche die beabsichtigte Soll-Geometrie des Laufstreifenquerschnitts im Rahmen eines Wickelvorgangs aufgebaut werden kann.

Aus der Praxis sind bereits Stripwinding-Maschinen bekannt, mit welchen unterschiedliche Spulbilder beim Wickeln eines Kautschukmaterialstreifens realisiert werden können. Bei der Berechnung der Spulmuster wird hierbei jedoch keine Optimierung der Streifenverteilung vorgenommen, sodass die Soll-Geometrie des Laufstreifenquerschnitts lediglich unpräzise durch die Laufstreifenwicklung reproduziert werden kann. Im Zusammenhang mit dem Laufstreifen-Stripwinding ist bisher lediglich das Einstellen einer beabsichtigten Streifenüberlappung bekannt, wodurch auf die Ausfüllung der Soll-Geometrie des Laufstreifenquerschnitts durch die Laufstreifenwicklung jedoch nur bedingt Einfluss genommen werden kann. Ferner sind Stripwinding-Maschinen bekannt, bei welchen manuell eingestellte Spulmuster vorgegeben werden können. Dies ist jedoch äußerst zeitaufwendig und somit für die industrielle Herstellung von Fahrzeugreifen ungeeignet.

Ferner besteht beim Stripwinding bisher das Problem, dass der Spiraleffekt zu einer erheblichen Beeinträchtigung des Wickelergebnisses führt, da aufgrund der spiralförmigen Wickelung des Kautschukmaterialstreifens ein Spulmuster nur für eine spezifische Winkellage gilt und somit die Soll-Geometrie des Laufstreifenquerschnitts entlang des Umfangs unterschiedlich durch die Laufstreifenwickelung ausgefüllt wird. In einer Winkellage kann das Spulmuster die auszufüllende Querschnittsfläche vergleichsweise exakt ausfüllen und in einer anderen Winkellage ergibt sich aufgrund des Spiraleffekts eine unpräzise Ausfüllung der Soll-Geometrie des Laufstreifenquerschnitts. Ferner ist im Zusammenhang mit Stripwinding die Berechnung von Lufteinschlüssen bisher nicht möglich, sodass keine diesbezügliche Spulmusteroptimierung erfolgt. Die Patentschrift CN 109 849 393 A offenbart die Merkmale des Oberbegriffs des Anspruchs 1.

Die der Erfindung zugrundeliegende Aufgabe besteht somit darin, die Erzeugung von Spulmustern zu ermöglichen, welche präziser an die Soll-Geometrie eines Laufstreifenquerschnitts angepasst sind.

Die Aufgabe wird gelöst durch ein Verfahren der eingangs genannten Art, wobei die elektronische Datenverarbeitungseinrichtung zum Berechnen des Spulmusters eines die Ausfüllung der Soll-Geometrie des Laufstreifenquerschnitts durch die Laufstreifenwickelung betreffendes Packungsproblem mittels eines Berechnungsalgorithmus löst.

Die Erfindung macht sich die Erkenntnis zunutze, dass zum Erzeugen einer Soll-Geometrie eines Laufstreifenquerschnitts mittels Stripwinding ein Packungsproblem zu lösen ist, welches neben der Soll-Geometrie des Laufstreifenquerschnitts die Eigenschaften des zu wickelnden Kautschukmaterialstreifens berücksichtigt. Die Eigenschaften des Kautschukmaterialstreifens, welche die elektronische Datenverarbeitung beim Berechnen des Spulmusters berücksichtigt, betreffen insbesondere die Abmaße des Kautschukmaterialstreifens, beispielsweise dessen Querschnittsform und -größe, und/oder die Verformungseigenschaften des Kautschukmaterialstreifens.

Mittels des erfindungsgemäßen Verfahrens können reifenspezifische Spulprogramme mit einem vergleichsweise geringen Zeitaufwand erzeugt werden. Die Nachteile der herkömmlichen Laufstreifenapplikation können somit mittels des Stripwinding-Verfahrens überwunden werden, ohne dass es zu einer Beeinträchtigung der Reifenqualität oder zu einer Verzögerung des Herstellungsprozesses kommt.

Das Packungsproblem, welches von der elektronischen Datenverarbeitungseinrichtung mittels des Berechnungsalgorithmus gelöst wird, betrifft das möglichst exakte Ausfüllen der Soll-Geometrie des Laufstreifenquerschnitts mittels der Wickelungen des Kautschukmaterialstreifens. Das Packungsproblem kann dabei ein zweidimensionales oder ein dreidimensionales Packungsproblem sein.

Das Spulmuster berücksichtigt eine Vielzahl von Wickelungen, welche über ein spiralförmiges Wickeln des Kautschukmaterialstreifens erzeugbar sind.

Das Verfahren kann ferner das Empfangen der Querschnittsinformationen zu der Soll-Geometrie des Laufstreifenquerschnitts durch die elektronische Datenverarbeitungseinrichtung umfassen. Die Querschnittsinformationen können von der elektronischen Datenverarbeitungseinrichtung auch von einem Datenspeicher oder einer Datenbank abgerufen werden. Ferner kann das Verfahren das Empfangen der Materialstreifeninformationen zu den Eigenschaften des Kautschukmaterialstreifens durch die elektronische Datenverarbeitungseinrichtung umfassen. Die elektronische Datenverarbeitungseinrichtung kann die Materialstreifeninformationen auch von einem Datenspeicher oder einer Datenbank abrufen.

In einer bevorzugten Ausführungsform des erfindungsgemäßen Verfahrens ist der Berechnungsalgorithmus ein Evolutionsalgorithmus. Durch die Anwendung eines Evolutionsalgorithmus werden mögliche Spulmuster in Anlehnung an die Natur künstlich evolviert. Die elektronische Datenverarbeitungseinrichtung ermittelt das Spulmuster somit mittels eines naturanalogen Optimierungsverfahrens.

Es ist außerdem ein erfindungsgemäßes Verfahren vorteilhaft, bei welchem die elektronische Datenverarbeitungseinrichtung ein oder mehrere Ausgangsspulmuster berechnet und das eine oder die mehreren Ausgangsspulmuster zur Verringerung des Grades der Abweichung zwischen dem sich aus dem einen oder den mehreren Ausgangsspulmustern ergebenden Querschnitten der Laufstreifenwicklung und der Soll-Geometrie des Laufstreifenquerschnitts modifiziert. Die Modifikation des einen oder der mehreren Ausgangsspulmuster kann in einem oder mehreren Optimierungszyklen erfolgen. In dem einen oder den mehreren Optimierungszyklen nimmt die elektronische Datenverarbeitungseinrichtung vorzugsweise eine Selektion, Rekombination, Mutation und/oder Evaluation von Spulmustern und/oder Spulmusterbereichen vor.

In einer Weiterbildung des erfindungsgemäßen Verfahrens berechnet die elektronische Datenverarbeitungseinrichtung mehrere Vergleichsspulmuster und vergleicht die mehreren Vergleichsspulmuster zur Auswahl des Vergleichsspulmusters mit dem geringsten Grad der Abweichung zwischen dem sich aus dem Vergleichsspulmuster ergebenden Querschnitt der Laufstreifenwickelung und der Soll-Geometrie des Laufstreifenquerschnitts miteinander. Die elektronische Datenverarbeitungseinrichtung berechnet also für jedes Vergleichsmuster den Grad der Abweichung zwischen dem sich aus dem jeweiligen Vergleichsspulmuster ergebenden Querschnitt der Laufstreifenwickelung und der Soll-Geometrie des Laufstreifenquerschnitts. Eine Abweichung von der Soll-Geometrie des Laufstreifenquerschnitts kann sich beispielsweise dadurch ergeben, dass ein Teilbereich der Soll-Geometrie des Laufstreifenquerschnitts nicht durch den gewickelten Kautschukmaterialstreifen ausgefüllt wird. Ferner kann sich eine Abweichung von der Soll-Geometrie des Laufstreifenquerschnitts ergeben, wenn der gewickelte Kautschukmaterialstreifen über die Soll-Geometrie des Laufstreifenquerschnitts übersteht.

In der erfindungsgemäßen Ausführungsform des erfindungsgemäßen Verfahrens löst die elektronische Datenverarbeitungseinrichtung zum Berechnen des Spulmusters mehrere über den spiralförmigen Windungsverlauf in Umfangsrichtung zusammenhängende Packungsprobleme, welche die Ausfüllung der Soll-Geometrie des Laufstreifenquerschnitts durch die Laufstreifenwickelung in verschiedenen Winkellagen der Laufstreifenwickelung betreffen. Auf diese Weise wird der Spiraleffekt zur Erzeugung einer harmonischen Materialverteilung entlang des Umfangs kompensiert. Die elektronische Datenverarbeitungseinrichtung löst in diesem Zusammenhang beispielsweise zwei, drei, vier oder mehr als vier Packungsprobleme. Wenn die Datenverarbeitungseinrichtung zwei Packungsprobleme löst, können sich diese beispielsweise auf die Winkellagen 0 Grad und 180 Grad beziehen. Wenn die elektronische Datenverarbeitungseinrichtung vier Packungsprobleme löst, können diese sich beispielsweise auf die Winkellagen 0 Grad, 90 Grad, 180 Grad und 270 Grad beziehen.

Das erfindungsgemäße Verfahren wird ferner dadurch vorteilhaft weitergebildet, dass die elektronische Datenverarbeitungseinrichtung beim Berechnen des Spulmusters nach der Erzeugung der Laufstreifenwickelung zu erwartende Materialumformungen berücksichtigt. Im Rahmen der Spulmusterberechnung erfolgt somit auch eine Simulation von Umformprozessen, welche in dem nachfolgenden Reifenherstellungsprozess stattfinden werden. Somit kann ein an die zu erwartenden Materialumformungen angepasstes Spulmuster durch die elektronische Datenverarbeitungseinrichtung berechnet werden.

Es ist ferner ein erfindungsgemäßes Verfahren vorteilhaft, bei welchem die elektronische Datenverarbeitungseinrichtung beim Berechnen des Spulmusters ein Risiko für sich beim Spulvorgang ergebende Lufteinschlüsse in der Laufstreifenwickelung berücksichtigt. Zum Ermitteln des Risikos für Lufteinschlüsse in der Laufstreifenwickelung berechnet die elektronische Datenverarbeitungseinrichtung vorzugsweise einen Verformungsfaktor für unterschiedliche Wickelungsabschnitte. Mit zunehmender Verformung steigt das Risiko von Lufteinschlüssen, sodass über einen Verformungsfaktor Rückschlüsse über Lufteinschlüsse in einer berechneten Laufstreifenwickelung möglich sind. Um das Lufteinschlussrisiko gering zu halten, werden bei der Lösung des Packungsproblems übermäßige Verformungen durch den Berechnungsalgorithmus vermieden.

Die der Erfindung zugrundeliegende Aufgabe wird ferner durch ein Verfahren zum Herstellen eines Fahrzeugreifens der eingangs genannten Art gelöst, wobei das Ermitteln des Spulmusters gemäß einem Verfahren nach einer der vorstehend beschriebenen Ausführungsformen erfolgt. Hinsichtlich der Vorteile und Modifikationen des erfindungsgemäßen Verfahrens zum Herstellen eines Fahrzeugreifens wird zunächst auf die Vorteile und Modifikationen des erfindungsgemäßen Verfahrens zum Ermitteln eines Spulmusters verwiesen.

In einer bevorzugten Ausführungsform des erfindungsgemäßen Verfahrens zum Herstellen eines Fahrzeugreifens wird beim Wickeln des Kautschukmaterialstreifens auf die umlaufende Materiallage des unvollständigen Reifenrohlings der unvollständige Reifenrohling um eine Rotationsachse rotiert. Ferner wird ein Spulkopf der Spuleinrichtung und/oder der unvollständige Reifenrohling während der Rotationsbewegung des unvollständigen Reifenrohlings zur Erzeugung des ermittelten Spulmusters parallel zur Rotationsachse bewegt. Über die Bewegung des Spulkopfes der Spuleinrichtung, über welchen die Feinpositionierung des Kautschukmaterialstreifens in Bezug auf den unvollständigen Reifenrohling erfolgt, und/oder über die Bewegung des unvollständigen Reifenrohlings parallel zur Rotationsachse wird der berechnete Verlauf des Kautschukmaterialstreifens zur Erzeugung des ermittelten Spulmusters umgesetzt.

Die der Erfindung zugrundeliegende Aufgabe wird ferner durch eine Anlage der eingangs genannten Art gelöst, wobei die elektronische Datenverarbeitungseinrichtung dazu eingerichtet ist, das Spulmuster gemäß einem Verfahren nach einem der vorstehenden Ansprüche zu ermitteln und/oder wobei die Anlage dazu eingerichtet ist, das Verfahren zum Herstellen eines Fahrzeugreifens nach einer der vorstehend beschriebenen Ausführungsformen auszuführen. Hinsichtlich der Vorteile und Modifikationen der erfindungsgemäßen Anlage wird somit auf die Vorteile und Modifikationen des erfindungsgemäßen Verfahrens zum Ermitteln eines Spulmusters und des erfindungsgemäßen Verfahrens zum Herstellen eines Fahrzeugreifens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen zu vulkanisierenden Reifenrohling mit einer Laufstreifenwicklung sowie die Soll-Geometrie des Laufstreifenquerschnitts in einer schematischen Darstellung;
- Fig. 2: ein Spulmusters für die Laufstreifenwicklung des in der Fig. 1 abgebildeten Reifenrohlings in einer schematischen Schnittdarstellung;
- Fig. 3: einen zu vulkanisierenden Reifenrohling mit einer Laufstreifenwicklung sowie die Soll-Geometrien des Laufstreifenquerschnitts in vier unterschiedlichen Winkellagen in einer schematischen Darstellung;
- Fig. 4: Spulmuster für die Laufstreifenwicklung des in der Fig. 3 abgebildeten Reifenrohlings in den vier unterschiedlichen Winkellagen in schematischen Schnittdarstellungen; und
- Fig. 5: zu erwartende Materialumformungen eines Laufstreifens im Rahmen eines Reifenherstellungsprozesses.

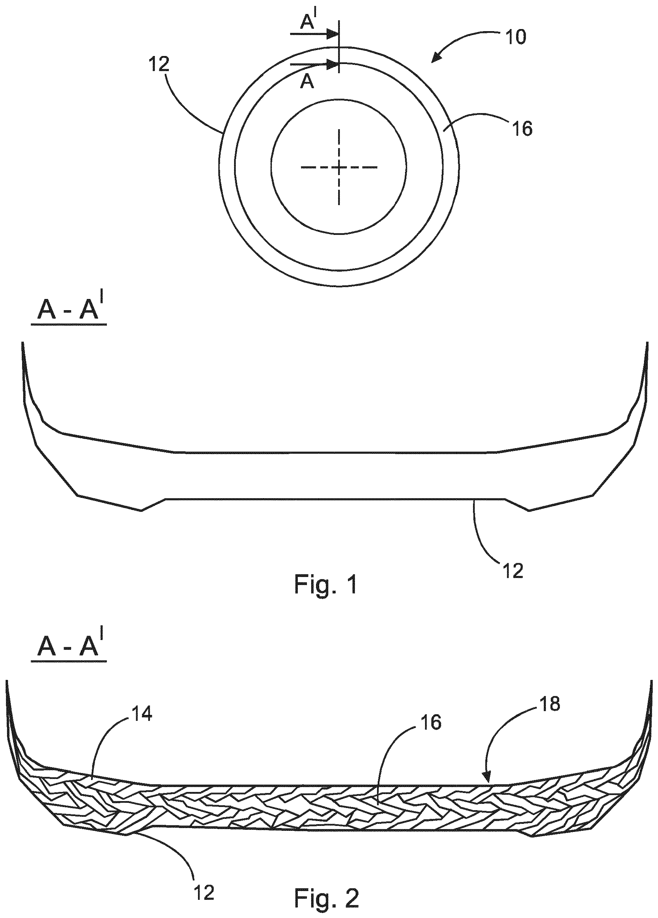

Die Fig. 1 zeigt einen zu vulkanisierenden Reifenrohling 10, welcher eine Laufstreifenwickelung 16 umfasst. Die Laufstreifenwickelung 16 ist ein Kautschukmaterialstreifen, welcher auf eine umlaufende Materiallage, vorliegend die Gürtelbandage, des unvollständigen Reifenrohlings aufgespult wurde.

Unterhalb des Reifenrohlings 10 ist die Soll-Geometrie 12 der Laufstreifenwickelung 16 dargestellt. Die Soll-Geometrie 12 lag der Berechnung eines Spulmusters 18 für die Laufstreifenwickelung 16 zugrunde.

Die Fig. 2 zeigt ein mittels einer elektronischen Datenverarbeitungseinrichtung berechnetes die Soll-Geometrie 12 des Laufstreifenquerschnitts ausfüllendes Spulmuster 18. Die elektronische Datenverarbeitungseinrichtung hat das Spulmuster 18 unter Berücksichtigung von Querschnittsinformationen zu der Soll-Geometrie des Laufstreifenquerschnitts und Materialstreifeninformationen zu Eigenschaften des Kautschukmaterialstreifens 14 berechnet.

Die elektronische Datenverarbeitungseinrichtung hat zum Berechnen des Spulmusters 18 eines die Ausfüllung der Soll-Geometrie 12 des Laufstreifenquerschnitts durch die Laufstreifenwickelung 16 betreffendes Packungsproblem mittels eines Berechnungsalgorithmus gelöst. Der von der Datenverarbeitungseinrichtung angewandte Berechnungsalgorithmus war dabei ein Evolutionsalgorithmus.

Im Rahmen der Spulmusterberechnung wurden zunächst mehrere Ausgangsspulmuster durch die elektronische Datenverarbeitungseinrichtung berechnet. Zur Verringerung des Grades der Abweichung zwischen dem sich aus den jeweiligen Spulmustern ergebenden Querschnitten der Laufstreifenwickelung 16 und der Soll-Geometrie 12 des Laufstreifenquerschnitts wurden die berechneten Ausgangsspulmuster im Nachgang durch die elektronische Datenverarbeitungseinrichtung modifiziert. Die Modifikation der mehreren Ausgangsspulmuster erfolgte in mehreren Optimierungszyklen. In den einzelnen Optimierungszyklen hat die elektronische Datenverarbeitungseinrichtung die Ausgangsspulmuster mehrfach verändert und die veränderten Spulmuster dann miteinander verglichen. Im Rahmen der Optimierung des Spulmusters 18 hat die elektronische Datenverarbeitungseinrichtung auch Rekombinationen vorgenommen, bei welchen Spulabschnitte unterschiedlicher Spulmuster miteinander kombiniert wurden. In den einzelnen Optimierungszyklen hat die elektronische Datenverarbeitungseinrichtung jeweils mehrere Vergleichsmuster berechnet und die mehreren Vergleichsmuster zur Auswahl des Vergleichsmusters mit dem geringsten Grad der Abweichung zwischen dem sich aus dem Vergleichsmuster ergebenden Querschnitt der Laufstreifenwickelung 16 und der Soll-Geometrie 12 des Laufstreifenquerschnitts miteinander verglichen. Im Rahmen des Berechnungsalgorithmus nimmt die elektronische Datenverarbeitungseinrichtung also Selektionen, Rekombinationen, Mutationen und Evaluationen der in den jeweiligen Optimierungszyklen berechneten Spulmuster 18 vor, um den Querschnitt der Laufstreifenwickelung 16 möglichst präzise an die Soll-Geometrie 12 anzupassen.

Bei der Berechnung der Wickelreihenfolge einer Laufstreifenwickelung 16 ist aufgrund des spiralförmigen Windungsverlaufs ein Spiraleffekt zu berücksichtigen, sodass sich das Spulmuster entlang des Umfangs der Laufstreifenwickelung 16 verändert.

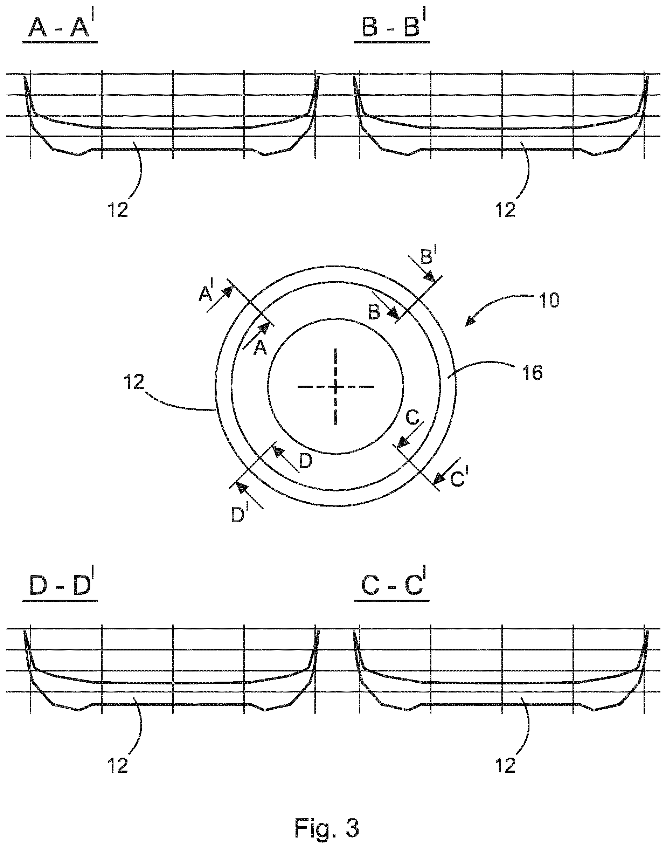

Die Fig. 3 zeigt, dass die Soll-Geometrie 12 eines zu vulkanisierenden Reifenrohlings 10 entlang des Umfangs unverändert bleibt. Die in der Fig. 3 dargestellten Querschnitte beziehen sich auf unterschiedliche Winkellagen und sind 90 Grad voneinander beanstandet. Zur Kompensation des Spiraleffekts ist es besonders vorteilhaft, wenn die elektronische Datenverarbeitung beim Berechnen des Spulmusters mehrere über den spiralförmigen Windungsverlauf in Umfangsrichtung zusammenhängende Packungsprobleme löst. Die über den spiralförmigen Windungsverlauf in Umfangsrichtung zusammenhängenden Packungsprobleme betreffen dabei die Ausfüllung der Soll-Geometrie 12 des Laufstreifenquerschnitts durch die Laufstreifenwickelung 16 in unterschiedlichen Winkellagen der Laufstreifenwickelung 16.

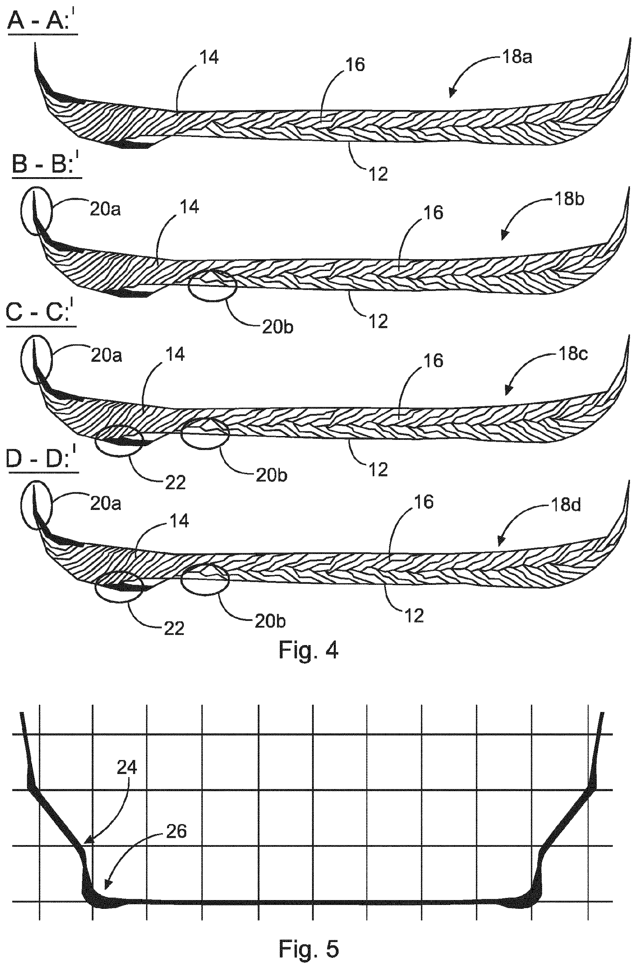

Die Fig. 4 zeigt eine berechnete Laufstreifenwickelung 16 in vier voneinander beanstandeten Winkellagen. Aus der Darstellung geht hervor, dass sich die Spulmuster 18a-18d in Umfangsrichtung aufgrund des spiralförmigen Windungsverlaufs des Kautschukmaterialstreifens 14 verändern.

Der Schnitt A-A' bezieht sich auf die Winkellage von 0 Grad, wobei in dieser Winkellage eine vergleichsweise präzise Ausfüllung der Soll-Geometrie 12 des Laufstreifenquerschnitts durch die Laufstreifenwickelung 16 vorliegt. Der Schnitt B-B' bezieht sich auf die Winkellage von 90 Grad und zeigt, dass bei dieser Winkellage Lücken 20a, 20b zwischen der Soll-Geometrie 12 des Laufstreifenquerschnitts und der Laufstreifenwickelung 16 vorliegen. Wie der Schnitt C-C' zeigt, welcher sich auf eine Winkellage von 180 Grad bezieht, erstrecken sich die Lücken 20a, 20b über einen nicht unwesentlichen Abschnitt des Umfangs der Laufstreifenwickelung 16. Zusätzlich zu den Lücken 20a, 20b liegt in der Winkellage von 270 Grad ein Überstand 22 vor, bei welchem die Laufstreifenwickelung 16 über die Soll-Geometrie 12 des Laufstreifenquerschnitts übersteht. Sowohl die Lücken 20a, 20b als auch der Überstand 22 erstrecken sich zumindest bis zur Winkellage von 270 Grad, welche im Schnitt D-D' dargestellt ist.

Dadurch, dass die elektronische Datenverarbeitungseinrichtung beim Berechnen des Spulmusters 18a-18d den spiralförmigen Windungsverlauf in Umfangsrichtung berücksichtigt, kann eine entlang des Umfangs an die Soll-Geometrie 12 angepasste Laufstreifenwickelung 16 berechnet werden. Mit der Anzahl der berücksichtigten Winkellagen und somit der Anzahl der zu lösenden Packungsprobleme wird der Grad, in welchem der Spiraleffekt von dem Berechnungsalgorithmus berücksichtigt wird, erhöht.

Die Fig. 5 zeigt beispielhaft einen Kompressionsbereich 24 und einen Dehnungsbereich 26 eines Laufstreifens. In dem Kompressionsbereich 24 ist eine Materialkompression in einem der noch folgenden Bearbeitungsschritte zu erwarten. In dem Dehnungsbereich 26 ist eine Materialdehnung in einem der weiteren Bearbeitungsschritte zu erwarten. Die elektronische Datenverarbeitungseinrichtung berücksichtigt beim Berechnen des Spulmusters 18 auch nach der Erzeugung der Laufstreifenwickelung 16 zu erwartende Materialumformungen, sodass die berechnete Laufstreifenwickelung 16 zum Ausgleich des Kompressionsbereichs 24 und des Dehnungsbereichs 26 bereits entsprechende verdickte bzw. verdünnte Materialbereiche aufweist.

Beim Berechnen des Spulmusters 18a-18d wird ferner ein Risiko für sich beim Spulvorgang ergebende Lufteinschlüsse in der Laufstreifenwickelung 16 berücksichtigt. Hierzu wird ein Verformungsfaktor bestimmt, welcher möglichst geringgehalten werden soll. Eine geringe Verformung des Kautschukmaterialstreifens 14 während des Wickelvorgangs reduziert das Risiko von Lufteinschlüssen.

Nach dem Berechnen eines geeigneten Spulmusters kann dieses im Rahmen der Reifenherstellung auf eine Gürtelbandage eines unvollständigen Reifenrohlings mittels einer Spuleinrichtung aufgespult werden. Nachdem der Reifenrohling 10 vervollständigt wurde, kann der Reifenrohling 10 dann mittels einer Vulkanisationseinrichtung vulkanisiert werden. Beim Wickeln des Kautschukmaterialstreifens 14 auf die Gürtelbandage des unvollständigen Reifenrohlings wird der unvollständige Reifenrohling um eine Rotationsachse rotiert. Zur Umsetzung des Spulmusters 18a-18d wird der unvollständige Reifenrohling während des Rotationsbewegung parallel zur Rotationsachse bewegt.

### Bezugszeichenliste

- 10: Reifenrohling
- 12: Soll-Geometrie
- 14: Kautschukmaterialstreifen
- 16: Laufstreifenwicklung
- 18, 18a-18d: Spulmuster
- 20a, 20b: Lücken
- 22: Überstand
- 24: Kompressionsbereich
- 26: Dehnungsbereich

## Patentansprüche

1. Verfahren zum Ermitteln eines durch Wickeln eines Kautschukmaterialstreifens (14) erzeugbaren Spulmusters (18, 18a-18d) für eine Laufstreifenwicklung (16) eines zu vulkanisierenden Reifenrohlings (10), mit dem Schritt:
- Berechnen eines eine Soll-Geometrie (12) eines Laufstreifenquerschnitts zumindest teilweise ausfüllenden Spulmusters (18, 18a-18d) durch eine elektronische Datenverarbeitungseinrichtung, wobei die elektronische Datenverarbeitungseinrichtung das Spulmuster (18, 18a-18d) unter Berücksichtigung von Querschnittsinformationen zu der Soll-Geometrie (12) des Laufstreifenquerschnitts und Materialstreifeninformationen zu Eigenschaften des Kautschukmaterialstreifens (14) berechnet;
**dadurch gekennzeichnet, dass** die elektronische Datenverarbeitungseinrichtung zum Berechnen des Spulmusters (18, 18a-18d) eines die Ausfüllung der Soll-Geometrie (12) des Laufstreifenquerschnitts durch die Laufstreifenwicklung (16) betreffendes Packungsproblem mittels eines Berechnungsalgorithmus löst,
wobei die elektronische Datenverarbeitungseinrichtung zum Berechnen des Spulmusters (18, 18a-18d) mehrere über den spiralförmigen Windungsverlauf in Umfangsrichtung zusammenhängende Packungsprobleme löst, welche die Ausfüllung der Soll-Geometrie (12) des Laufstreifenquerschnitts durch die Laufstreifenwicklung (16) in unterschiedlichen Winkellagen der Laufstreifenwicklung (16) betreffen.

2. Verfahren nach Anspruch 1,
**dadurch gekennzeichnet, dass** der Berechnungsalgorithmus ein Evolutionsalgorithmus ist.

3. Verfahren nach Anspruch 1 oder 2,
**dadurch gekennzeichnet, dass** die elektronische Datenverarbeitungseinrichtung ein oder mehrere Ausgangsspulmuster berechnet und das eine oder die mehreren Ausgangsspulmuster zur Verringerung des Grades der Abweichung zwischen dem sich aus dem einen oder den mehreren Ausgangsspulmustern ergebenden Querschnitten der Laufstreifenwicklung (16) und der Soll-Geometrie (12) des Laufstreifenquerschnitts modifiziert.

4. Verfahren nach einem der vorstehenden Ansprüche,
**dadurch gekennzeichnet, dass** die elektronische Datenverarbeitungseinrichtung mehrere Vergleichsspulmuster berechnet und die mehreren Vergleichsspulmuster zur Auswahl des Vergleichsspulmusters mit dem geringsten Grad der Abweichung zwischen dem sich aus dem Vergleichsspulmuster ergebenden Querschnitt der Laufstreifenwicklung (16) und der Soll-Geometrie (12) des Laufstreifenquerschnitts miteinander vergleicht.

5. Verfahren nach einem der vorstehenden Ansprüche,
**dadurch gekennzeichnet, dass** die elektronische Datenverarbeitungseinrichtung beim Berechnen des Spulmusters (18, 18a-18d) nach der Erzeugung der Laufstreifenwicklung (16) zu erwartende Materialumformungen berücksichtigt.

6. Verfahren nach einem der vorstehenden Ansprüche,
**dadurch gekennzeichnet, dass** die elektronische Datenverarbeitungseinrichtung beim Berechnen des Spulmusters (18, 18a-18d) ein Risiko für sich beim Spulvorgang ergebende Lufteinschlüsse in der Laufstreifenwicklung (16) berücksichtigt.

7. Verfahren zum Herstellen eines Fahrzeugreifens, mit den Schritten:
- Ermitteln eines Spulmusters (18, 18a-18d) für eine Laufstreifenwicklung (16) eines zu vulkanisierenden Reifenrohlings (10) mittels einer elektronischen Datenverarbeitungseinrichtung;
- Wickeln eines Kautschukmaterialstreifens (14) auf eine umlaufende Materiallage, insbesondere eine Gürtelbandage, eines unvollständigen Reifenrohlings in dem ermittelten Spulmuster (18, 18a-18d) mittels einer Spuleinrichtung; und
- Vulkanisieren des Reifenrohlings (10) nach dessen Vervollständigung mittels einer Vulkanisationseinrichtung;
**dadurch gekennzeichnet, dass** das Ermitteln eines Spulmusters (18, 18a-18d) gemäß einem Verfahren nach einem der vorstehenden Ansprüche erfolgt.

8. Verfahren nach Anspruch 7,
**dadurch gekennzeichnet, dass** beim Wickeln des Kautschukmaterialstreifens (14) auf die umlaufende Materiallage des unvollständigen Reifenrohlings der unvollständige Reifenrohling um eine Rotationsachse rotiert wird und ein Spulkopf der Spuleinrichtung und/oder der unvollständige Reifenrohling während der Rotationsbewegung des unvollständigen Reifenrohlings zur Erzeugung des ermittelten Spulmusters (18, 18a-18d) parallel zur Rotationsachse bewegt wird.

9. Anlage zum Herstellen eines Fahrzeugreifens, mit
- einer elektronischen Datenverarbeitungseinrichtung zum Ermitteln eines Spulmusters (18, 18a-18d) für eine Laufstreifenwicklung (16) eines zu vulkanisierenden Reifenrohlings (10);
- einer Spuleinrichtung zum Wickeln eines Kautschukmaterialstreifens (14) auf eine umlaufende Materiallage, insbesondere eine Gürtelbandage, eines unvollständigen Reifenrohlings in einem von der elektronischen Datenverarbeitungseinrichtung berechneten Spulmuster (18, 18a-18d); und
- einer Vulkanisationseinrichtung zum Vulkanisieren des Reifenrohlings (10) nach dessen Vervollständigung;
**dadurch gekennzeichnet, dass** die elektronische Datenverarbeitungseinrichtung dazu eingerichtet ist, das Spulmuster (18, 18a-18d) gemäß einem Verfahren nach einem der Ansprüche 1 bis 6 zu ermitteln und/oder wobei die Anlage dazu eingerichtet ist, das Verfahren zum Herstellen eines Fahrzeugreifens nach Anspruch 7 oder 8 auszuführen.

## Claims

1. Method for determining a winding pattern (18, 18a-18d), able to be generated by winding a rubber material strip (14), for a tread winding (16) of a green tyre (10) to be vulcanized, having the step of:
- calculating a winding pattern (18, 18a-18d), at least partially occupying a target geometry (12) of a tread cross section, using an electronic data processing device, wherein the electronic data processing device calculates the winding pattern (18, 18a-18d) taking into consideration cross-sectional information about the target geometry (12) of the tread cross section and material strip information about properties of the rubber material strip (14);
**characterized in that** the electronic data processing device for calculating the winding pattern (18, 18a-18d) solves a packing problem relating to the occupation of the target geometry (12) of the tread cross section by the tread winding (16) by means of a calculation algorithm,
wherein the electronic data processing device for calculating the winding pattern (18, 18a-18d) solves a plurality of packing problems which are linked in the circumferential direction along the spiral winding course and relate to the occupation of the target geometry (12) of the tread cross section by the tread winding (16) in different angular positions of the tread winding (16).

2. Method according to Claim 1,
**characterized in that** the calculation algorithm is an evolution algorithm.

3. Method according to Claim 1 or 2,
**characterized in that** the electronic data processing device calculates one or more starting winding patterns and modifies the one or more starting winding patterns to reduce the degree of deviation between the cross sections, resulting from the one or more starting winding patterns, of the tread winding (16) and the target geometry (12) of the tread cross section.

4. Method according to one of the preceding claims,
**characterized in that** the electronic data processing device calculates a plurality of comparison winding patterns and compares the plurality of comparison winding patterns with one another to select the comparison winding pattern with the lowest degree of deviation between the cross section, resulting from the comparison winding pattern, of the tread winding (16) and the target geometry (12) of the tread pattern cross section.

5. Method according to one of the preceding claims,
**characterized in that** the electronic data processing device, when calculating the winding pattern (18, 18a-18d), takes into account material deformations to be expected after the creation of the tread winding (16).

6. Method according to one of the preceding claims,
**characterized in that** the electronic data processing device, when calculating the winding pattern (18, 18a-18d), takes into account a risk for air inclusions in the tread winding (16) that occur during the winding operation.

7. Method for producing a vehicle tyre, having the steps of:
- determining a winding pattern (18, 18a-18d) for a tread winding (16) of a green tyre (10) to be vulcanized, by means of an electronic data processing device;
- winding a rubber material strip (14) onto an encircling material ply, in particular a belt bandage, of an incomplete green tyre in the determined winding pattern (18, 18a-18d) by means of a winding device; and
- vulcanizing the green tyre (10) after the completion thereof by means of a vulcanizing device;
**characterized in that** the determination of a winding pattern (18, 18a-18d) takes place using a method according to one of the preceding claims.

8. Method according to Claim 7,
**characterized in that**, during the winding of the rubber material strip (14) onto the encircling material ply of the incomplete green tyre, the incomplete green tyre is rotated about an axis of rotation and a winding head of the winding device and/or the incomplete green tyre is moved parallel to the axis of rotation during the rotational movement of the incomplete green tyre in order to create the determined winding pattern (18, 18a-18d).

9. Installation for producing a vehicle tyre, having
- an electronic data processing device for determining a winding pattern (18, 18a-18d) for a tread winding (16) of a green tyre (10) to be vulcanized;
- a winding device for winding a rubber material strip (14) onto an encircling material ply, in particular a belt bandage, of an incomplete green tyre in a winding pattern (18, 18a-18d) calculated by the electronic data processing device; and
- a vulcanizing device for vulcanizing the green tyre (10) after the completion thereof;
**characterized in that** the electronic data processing device is designed to determine the winding pattern (18, 18a-18d) using a method according to one of Claims 1 to 6 and/or wherein the installation is designed to carry out the method for producing a vehicle tyre according to Claim 7 or8.

## Revendications

1. Procédé de détermination d'un modèle de bobinage (18, 18a-18d) pouvant être produit par enroulement d'une bande de matériau caoutchouteux (14) pour un enroulement de bande de roulement (16) d'une ébauche de pneumatique (10) à vulcaniser, comprenant l'étape consistant à :
- calculer un modèle de bobinage (18, 18a-18d) remplissant au moins partiellement une géométrie de consigne (12) d'une section transversale de bande de roulement au moyen d'un dispositif électronique de traitement de données, dans lequel le dispositif électronique de traitement de données calcule le modèle de bobinage (18, 18a-18d) en tenant compte d'informations de section transversale relatives à la géométrie de consigne (12) de la section transversale de bande de roulement et d'informations de bande de matériau relatives à des propriétés de la bande de matériau caoutchouteux (14) ;
**caractérisé en ce que**, pour calculer le modèle de bobinage (18, 18a-18d), le dispositif électronique de traitement de données résout au moyen d'un algorithme de calcul un problème d'emballage concernant le remplissage de la géométrie de consigne (12) de la section transversale de bande de roulement par l'enroulement de bande de roulement (16),
dans lequel, pour calculer le modèle de bobinage (18, 18a-18d), le dispositif électronique de traitement de données résout plusieurs problèmes d'emballage liés par l'intermédiaire du tracé d'enroulement en spirale dans la direction circonférentielle, lesquels problèmes concernent le remplissage de la géométrie de consigne (12) de la section transversale de bande de roulement par l'enroulement de bande de roulement (16) dans différentes positions angulaires de l'enroulement de bande de roulement (16).

2. Procédé selon la revendication 1,
**caractérisé en ce que** l'algorithme de calcul est un algorithme d'évolution.

3. Procédé selon la revendication 1 ou 2,
**caractérisé en ce que** le dispositif électronique de traitement de données calcule un ou plusieurs modèles de bobinage de sortie et modifie lesdits un ou plusieurs modèles de bobinage de sortie pour réduire le degré d'écart entre la section transversale de l'enroulement de bande de roulement (16) résultant desdits un ou plusieurs modèles de bobinage de sortie et la géométrie de consigne (12) de la section transversale de bande de roulement.

4. Procédé selon l'une quelconque des revendications précédentes, **caractérisé en ce que** le dispositif électronique de traitement de données calcule plusieurs modèles de bobinage de comparaison et compare entre eux les multiples modèles de bobinage de comparaison pour sélectionner le modèle de bobinage de comparaison présentant le plus petit degré d'écart entre la section transversale de l'enroulement de bande de roulement (16) résultant du modèle de bobinage de comparaison et la géométrie de consigne (12) de la section transversale de bande de roulement.

5. Procédé selon l'une quelconque des revendications précédentes, **caractérisé en ce que** le dispositif électronique de traitement de données tient compte de déformations du matériau auxquelles on doit s'attendre lors du calcul du modèle de bobinage (18, 18a-18d) après que l'enroulement de bande de roulement (16) a été produit.

6. Procédé selon l'une quelconque des revendications précédentes, **caractérisé en ce que** le dispositif électronique de traitement de données tient compte, lors du calcul du modèle de bobinage (18, 18a-18d), d'un risque d'inclusions d'air dans l'enroulement de bande de roulement (16), qui se produisent lors du bobinage.

7. Procédé de fabrication d'un pneumatique de véhicule, comprenant les étapes consistant à :
- déterminer, au moyen d'un dispositif électronique de traitement de données, un modèle de bobinage (18, 18a-18d) pour un enroulement de bande de roulement (16) d'une ébauche de pneumatique (10) à vulcaniser ;
- enrouler, au moyen d'un dispositif de bobinage, une bande de matériau caoutchouteux (14) sur une couche de matériau circonférentielle, en particulier un bandage de ceinture, d'une ébauche de pneumatique incomplète dans le modèle de bobinage (18, 18a-18d) déterminé ; et
- vulcaniser, au moyen d'un dispositif de vulcanisation, l'ébauche de pneumatique (10) après l'avoir achevée ;
**caractérisé en ce que** la détermination d'un modèle de bobinage (18, 18a-18d) est effectuée conformément à un procédé selon l'une quelconque des revendications précédentes.

8. Procédé selon la revendication 7,
**caractérisé en ce que**, lors de l'enroulement de la bande de matériau caoutchouteux (14) sur la couche de matériau circonférentielle de l'ébauche de pneumatique incomplète, l'ébauche de pneumatique incomplète est mise en rotation autour d'un axe de rotation et d'une tête de bobinage du dispositif de bobinage et/ou l'ébauche de pneumatique incomplète est déplacée parallèlement à l'axe de rotation pendant le mouvement de rotation de l'ébauche de pneumatique incomplète pour produire le modèle de bobinage (18, 18a-18d) déterminé.

9. Installation de fabrication d'un pneumatique de véhicule, comprenant
- un dispositif électronique de traitement de données destiné à déterminer un modèle de bobinage (18, 18a-18d) pour un enroulement de bande de roulement (16) d'une ébauche de pneumatique (10) à vulcaniser ;
- un dispositif de bobinage destiné à enrouler une bande de matériau caoutchouteux (14) sur une couche de matériau circonférentielle, en particulier un bandage de ceinture, d'une ébauche de pneumatique incomplète dans un modèle de bobinage (18, 18a-18d) calculé par le dispositif électronique de traitement de données ; et
- un dispositif de vulcanisation destiné à vulcaniser l'ébauche de pneumatique (10) après l'avoir achevée ;
**caractérisée en ce que** le dispositif électronique de traitement de données est conçu pour déterminer le modèle de bobinage (18, 18a-18d) conformément à un procédé selon l'une quelconque des revendications 1 à 6, et/ou l'installation étant conçue pour mettre en œuvre le procédé de fabrication d'un pneumatique de véhicule selon la revendication 7 ou 8.
